# EUROPEAN PATENT SPECIFICATION

(11) **EP 4 376 237 B1**
(45) Date of publication and mention of the grant of the patent: **09.09.2026**
(21) Application number: 24170354.5
(22) Date of filing: 28.02.2020
(51) Int. Cl.: B63B 35/04, H02G 1/10

(54) **VESSEL AND METHOD FOR OFFSHORE CABLE LAYING**
SCHIFF UND VERFAHREN ZUM OFFSHORE-KABELVERLEGEN
NAVIRE ET PROCÉDÉ DE POSE DE CÂBLE EN MER

(30) Priority: 01.03.2019 NL 2022670; 14.11.2019 NL 2024241
(43) Date of publication of application: 29.05.2024
(62) Document number(s) of the earlier application(s) in accordance with Art. 76 EPC: 20710314.4 / 3 931 075
(73) Proprietor: Itrec B.V., 3115 HH Schiedam (NL)
(72) Inventor: VEHMEIJER, Terence Willem August, 3115 HH SCHIEDAM (NL); NOUWENS, Ronny Lambertus Waltherus, 3115 HH SCHIEDAM (NL); VAN DEN DONKER, Tim, 3115 HH SCHIEDAM (NL)
(74) Representative: EP&C

(56) References cited:
- WO-A1-2018/217085
- GB-A- 2 363 362
- NL-A- 1 041 049

## Description

The invention relates to a vessel and method for offshore cable laying in which the cable is paid out from a vessel and laid on or in a seabed using the vessel.

The cable to be laid may be a power, electrical or data communication cable, but may also be a flexible article having a similar behaviour as a cable, e.g. umbilicals or flexible pipelines.

The present invention is in particular applicable to the situation in which a cable needs to be laid between two offshore locations in which a first end of the cable is lowered at a first location and subsequently an opposite second end of the cable is lowered at a second location after which a cable portion in between the first and second end is lowered to the seabed using a so-called overboarding quadrant.

A prior art example of a device and method for offshore cable laying can be found in international patent publication WO2018/117833A1 and in NL1041049A.

A drawback of cables and other similar flexible articles is that they can easily be damaged, e.g. when the cable is bend beyond the minimum radius of curvature, twisted too much or handled too roughly, which may for instance be caused by wave-induced motion of the vessel.

It is therefore an object of the invention to provide a device and method for offshore cable laying in which the risk of damaging the cable during the method is reduced.

According to the invention, there is provided a vessel for lowering a flexible article, e.g. a cable, into the sea, said vessel comprising:
- a storage unit for storing a flexible article;
- a first guide for guiding the flexible article into the sea;
- a second guide for guiding the flexible article into the sea;
- an overboarding quadrant; and
- an article support system for supporting the article between the storage unit and the first and second guides,

wherein the article support system includes a first support section extending between the first guide and the overboarding quadrant, and a second support section extending between the second guide and the overboarding quadrant, said overboarding quadrant being configured to support and guide the article between the first support section and the second support section, and a third support section extending between the storage unit and the second support section,
wherein the vessel further includes a frame supporting at least the first guide, the second guide, the first support section, the second support section and the overboarding quadrant, and wherein the frame is moveable relative to a deck of the vessel in a substantially horizontal plane to compensate for wave-induced motion of the vessel.

In an embodiment, the storage unit is a first storage unit and the vessel further comprises a second storage unit for storing a flexible article, wherein the article support system includes a fourth support section extending between the second storage unit and the first support section.

In an embodiment, a part of the third support section is supported by the frame.

In an embodiment, a part of the fourth support section is supported by the frame.

In an embodiment, a support structure is arranged on the frame that is part of both the third and fourth support sections.

In an embodiment, the support structure arranged on the frame is moveable relative to the frame to adjust for article length differences between moveable frame and fixed storage unit caused by the movement of the frame relative to the deck of the vessel.

In an embodiment, the deck of the vessel is provided with rails extending in a transverse direction of the vessel, wherein the vessel includes an actuation system between the rails and the frame, wherein the actuation system is configured to move the frame in a direction parallel to the rails, and wherein the actuation system is further configured to move the frame in a direction parallel to a longitudinal axis of the vessel.

In an embodiment, the overboarding quadrant is connectable to a carriage that is moveable in a direction parallel to the longitudinal axis of the frame between a location at or near the first and second support sections and a location at a larger distance from the first and second support sections.

In an embodiment, the overboarding is connected or connectable to a winch by a pulling cable to position the overboarding quadrant over and along the first and second support sections.

In an embodiment, the vessel further includes a quadrant handling system at the first and second guide side of the frame, which quadrant handling system is configured to receive the overboarding quadrant and to move the overboarding quadrant between a substantially horizontal orientation at the first and second support sections and a substantially vertical orientation to lower the overboarding quadrant into the sea.

In an embodiment, the vessel includes a tensioner arranged on the frame in the first or second support section to control movement of the flexible article along the first or second support section, respectively. Preferably, the tensioner is arranged at an end of the first or second support section opposite the corresponding first or second guide.

In an embodiment, the tensioner is a first tensioner and arranged in the first support section, and the vessel includes a second tensioner arranged on the frame in the second support section to control movement of the flexible article along the second support section.

In an embodiment, the frame is moveable in said substantially horizontal plane by being rotatable about a substantially vertical axis and by being translatable in a longitudinal direction of the frame.

The invention also relates to a method for lowering a flexible article into the sea, wherein use is made of the vessel according to the eighth aspect of the invention, said method comprising the following steps:
a) lowering a flexible article into the sea using at least the storage unit, the article support system, and the first and/or second guide,
b) moving the frame to compensate for wave-induced motions of the vessel.

In an embodiment, the frame is moved to compensate for the effect of the wave-induced motions of the vessel on the location where the lowered flexible article contacts a bottom of the sea. In an embodiment, such compensation is obtained by controlling movement of the frame in the horizontal plane to keep an exit point where the article leaves the first and/or second guide at the same position relative to the bottom of the sea independent of vessel motions in said horizontal plane and to haul in or pay out the flexible article to compensate for heave of the vessel, e.g. as explained in the first aspect of the invention. As a result thereof, the shape of the article between vessel and the contact location at the bottom of the sea is minimally affected. However, in another embodiment, other shapes between vessel and contact location are allowed while maintaining the position of the contact location, thereby allowing to minimize or remove heave compensation.

In an embodiment, a support structure is arranged on the frame, wherein the support structure arranged on the frame is moveable relative to the frame, and wherein at least for a predetermined time during step b) the support structure is moved relative to the frame to adjust for article length differences between moveable frame and fixed storage unit caused by movement of the frame relative to the deck of the vessel.

In an embodiment, the overboarding quadrant is connectable to a carriage that is moveable in a direction parallel to the longitudinal axis of the frame between a location at or near the first and second support sections and a location at a larger distance from the first and second support sections, wherein at least for a predetermined time during step b), the carriage is moved relative to the frame to adjust for article length differences caused by movement of the frame and/or heave compensation.

It will be apparent to the skilled person that various aspects of the invention can be combined where possible. Hence, features and embodiments described in relation to one aspect may also be combined with other aspects and or not repeated to avoid unduly repetition and keep the specification concise.

The invention will now be described in a non-limiting way by reference to the accompanying drawings in which like parts are indicated using like reference symbols, and in which:
- Fig. 1: depicts a cross-sectional view of a vessel;
- Fig. 2: depicts a plan view of the vessel of Fig. 1;
- Fig. 3: depicts a perspective rear view of a stern of a vessel according to an embodiment different but similar to the embodiment of Figs 1 and 2 while lowering an overboarding quadrant into the sea;
- Fig. 4: depicts a perspective top view of a vessel according to the invention;
- Fig. 5: depicts a perspective side view of the vessel of Fig. 4;
- Fig. 6: depicts a top view of the vessel of Fig. 4 with a frame carrying cable laying equipment in a central position of a substantially horizontal plane;
- Fig. 7: depicts a top view of the vessel of Fig. 4 with the frame in one corner of the substantially horizontal plane;
- Fig. 8: depicts a top view of the vessel of Fig. 4 with the frame in an opposite corner of the substantially horizontal plane;
- Fig. 9: depicts an initial cable curve, an uncompensated cable curve after vessel motion and a compensated cable curve after vessel motion between vessel and a bottom of a sea;
- Fig. 10: depicts a top view of a vessel according to the invention;
- Fig. 11: depicts a guide for a vessel according to the invention;
- Fig. 12: depicts a guide for a vessel according to the invention;
- Fig. 13: depicts a guide for a vessel according to the invention; and
- Fig. 14: depicts a guide for a vessel according to the invention.

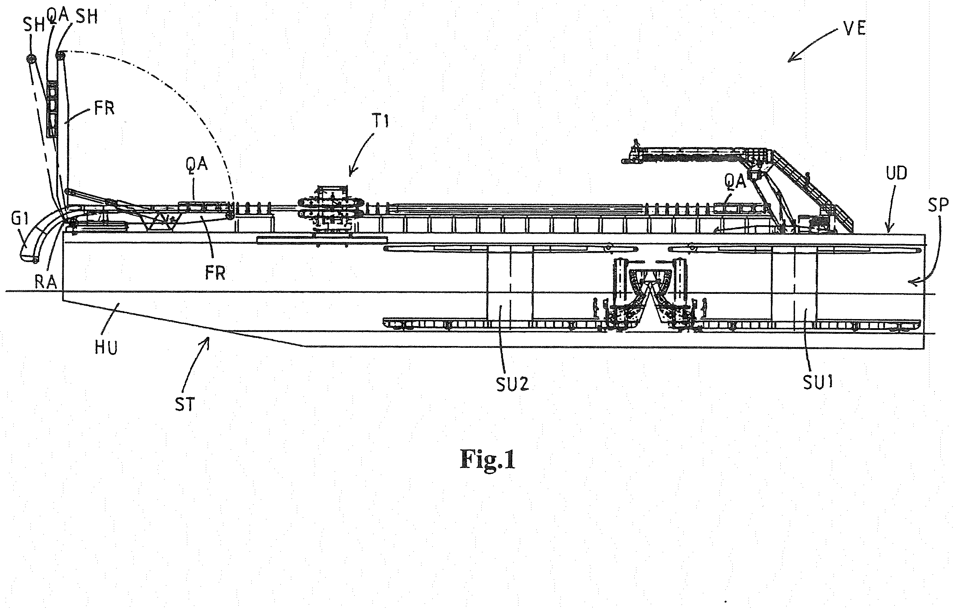

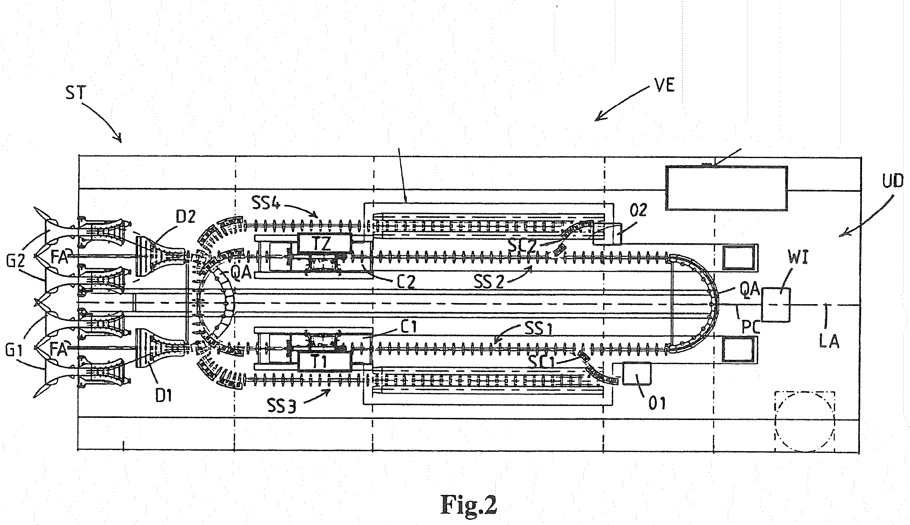

Figs. 1 and 2 depict a cross-sectional view and plan view, respectively, of a vessel VE.

The vessel VE comprises a hull HU, here a monohull, providing buoyancy to the vessel VE and supporting and accommodating all equipment. Figs. 1 and 2 only depict a stern ST side of the vessel VE. The bow, usually also holding a superstructure to accommodate personnel, etc., is not depicted here and also not relevant for the present invention or aspects thereof.

The hull HU defines an upper deck UD with a space SP below the upper deck UD in this example accommodating two storage units SU1, SU2 in the form of reels which are rotatable about a substantially vertical axis. The storage units SU1, SU2 are configured to store a certain length of flexible article, e.g. a cable. In this embodiment, the storage units SU1, SU2 are arranged substantially permanently inside the space SP. A cable may be reeled onto a storage unit from an onshore source or from another vessel. In an alternative embodiment, the storage units SU1, SU2 are exchangeable, so that a filled storage unit may be exchanged with an empty storage unit.

At the stern ST of the vessel, a first guide G1 and a second guide G2 for guiding the flexible article into the sea are shown. The first and second guides G1, G2 are in this embodiment chutes which are moveable in a horizontal direction transverse to a longitudinal axis LA of the vessel VE. To show this movability of the first and second guides G1, G2, the first and second guides G1, G2 are depicted in Fig. 2 in their two extremes at the same time. Hence, although it seems at first glance that the vessel comprises four guides when looking at Fig. 2, it actually are two guides shown in two distinct positions on the upper deck UD.

The vessel VE further comprises an article support system for supporting the article and an overboarding quadrant QA.

The article support system includes a first support section SS1 extending between the first guide G1 and the overboarding quadrant, a second support section SS2 extending between the second guide G2 and the overboarding quadrant QA, a third support section SS3 extending between the first storage unit SU1 and the second support section SS2, and a fourth support section SS4 extending between the second storage unit SU2 and the first support section SS1. In Fig. 2, a first opening O1 and a second opening O2 are shown where the first and second storage units, respectively, are able to provide a flexible article to the third and fourth support section, respectively.

This allows a flexible article originating from the first storage unit SU1 to be lowered into the sea by travelling along a support path subsequently including the third support section SS3, the second support section SS2, the overboarding quadrant QA, the first support section SS1 and the first guide G1. It also allows a flexible article originating from the second storage unit SU2 to be lowered into the sea by travelling along a support path subsequently including the fourth support section SS4, the first support section SS1, the overboarding quadrant QA, the second support section SS2, and the second guide G2.

The first support section SS1 includes a diverter D1 to guide the flexible article from the first support section towards the first guide independent of the transverse position of the first guide G1.

The second support section SS2 includes a diverter D2 to guide the flexible article from the second support section towards the second guide independent of the transverse position of the second guide G2.

The combination of diverter D1 and the first guide G1, and the combination of diverter D2 and the second guide G2 are preferably configured such that the radius of curvature of the flexible article is always above a predetermined minimal value independent of the transverse position of the respective guide G1, G2.

The vessel VE comprises a first short-cut SC1 between the first opening O1 and the first support section allowing to bypass the third support section SS3, the second support section SS2 and the overboarding quadrant QA and provide a direct path from the first storage unit SU1 to the first guide G1 via the first support section SS1.

The vessel VE also comprises a second short-cut SC2 between the second opening O2 and the second support section allowing to bypass the fourth support section SS4, the first support section SS1 and the overboarding quadrant QA and provide a direct path from the second storage unit SU1 to the second guide G2 via the second support section SS2.

Provided in the first support section is a first tensioner T1 to engage with the flexible article in order to move the flexible article along the first support section SS1. The first tensioner T1 is provided on a first carriage C1 that is moveable in a longitudinal direction of the vessel VE to compensate for wave-induced motions of the vessel, e.g. heave motions.

Provided in the second support section is a second tensioner T2 to engage with the flexible article in order to move the flexible article along the second support section SS2. The second tensioner T2 is provided on a second carriage C2 that is moveable in a longitudinal direction of the vessel VE to compensate for wave-induced motions of the vessel, e.g. heave motions.

The first, second, third and fourth support sections are arranged mainly parallel to each other and such that the second support section is arranged in between the fourth support section and the first support section, and the first support section is arranged in between third support section and the second support section, thereby obtaining a more or less symmetrical layout for use with both the first and second storage units.

The overboarding quadrant QA is moveable in longitudinal direction of the vessel along the first and second support sections and is configured to support and guide the flexible article between the first and second support sections. The overboarding quadrant is moveable between the two opposite ends of the first and second support sections as depicted in Fig. 2, where the quadrant is shown in two distinct locations. The tensioners T1 and T2 are configured to disengage from the flexible article and/or move away from the first and second support sections to allow the passage of the overboarding quadrant is necessary.

The overboarding quadrant can be used to provide a buffer with flexible article on the vessel, but is mainly used for lowering the flexible article into the sea and/or to provide heave compensation to the flexible article.

The overboarding quadrant is connected to a winch WI via a pulling cable PC to allow the overboarding quadrant to be moved.

When the overboarding quadrant is in the shown position at the first and second guide side of the first and second support sections, the overboarding quadrant is positioned over a frame FR of a quadrant handling system, which is best shown in Fig. 1. The frame FR can be moved between a substantially horizontal orientation and a substantially vertical orientation by rotating about a rotation axis RA to move the quadrant between a substantially horizontal orientation and a substantially vertical orientation to lower the quadrant into the sea. In Fig. 1, the overboarding quadrant and the frame are shown in three positions, a substantially horizontal orientation, a substantially vertical orientation and an inclined orientation in dashed lines which may be used after the overboarding quadrant has left the frame FR to create more distance between overboarding quadrant and vessel.

It is to be noted that in Fig. 2, the flexible article FA is shown to extend from the first guide G1 to the second guide G2 via the overboarding quadrant QA, which may be the situation prior to lowering the overboarding quadrant and flexible article into the sea. The overboarding quadrant is then first moved from the position near the winch WI to the position near the diverters D1, D2, preferably while heave compensating the overboarding quadrant using the winch WI and pulling cable PC. Subsequently, the overboarding quadrant is rotated to the substantially vertical orientation. The pulling cable PC is then preferably arranged over a sheave SH arranged at the free end of the frame FR so that the winch WI and the pulling cable PC are able to keep positioning the quadrant on the frame during rotation of the frame, and preferably while heave compensating the quadrant on the frame.

The quadrant can then be lowered into the sea by paying out the pulling cable PC, preferably also while heave compensating the quadrant.

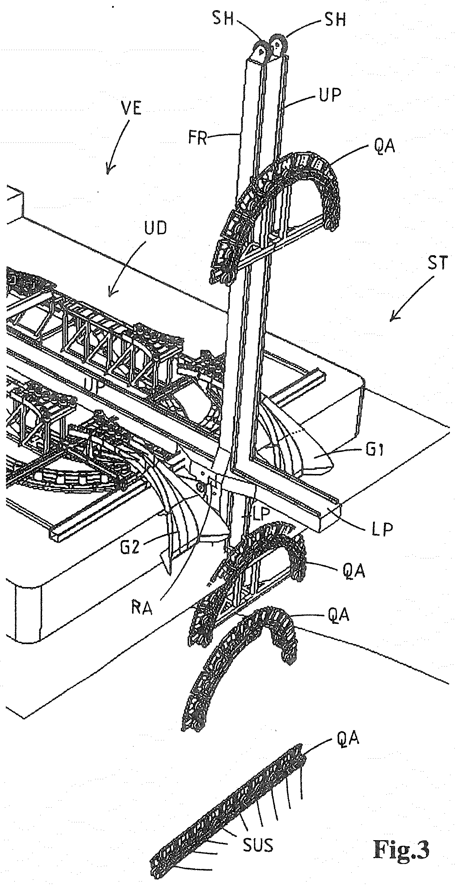

Fig. 3 depicts the stern of a vessel VE according to an embodiment different but similar to the embodiment of Figs. 1 and 2.

One difference is that the frame FR of the quadrant handling system, which is shown in two orientations in Fig. 3, has both an upper portion UP extending above the rotation axis RA and a lower portion LP extending below the rotation axis RA seen in the vertical orientation of the frame FR, which lower portion extends into the water in the vertical orientation to guide the quadrant beyond the splash zone into the water, preferably while heave compensating the quadrant QA.

The quadrant in Fig. 3 has a support with a plurality of support segments SUS that are moveable relative to each other, so that the guide path as provided by the support can be arcuate in a lowering configuration as shown in Fig. 1, 2 and in Fig. 3 for the three upper positions of the quadrant, and so that the guide path can be straight as shown in the lower position of the quadrant in Fig. 3 when the quadrant is near the sea bottom.

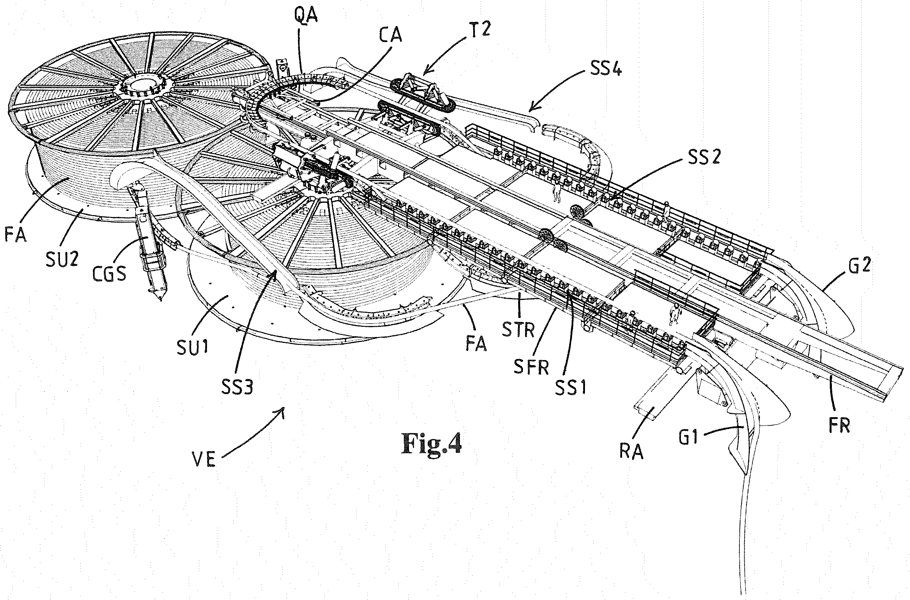

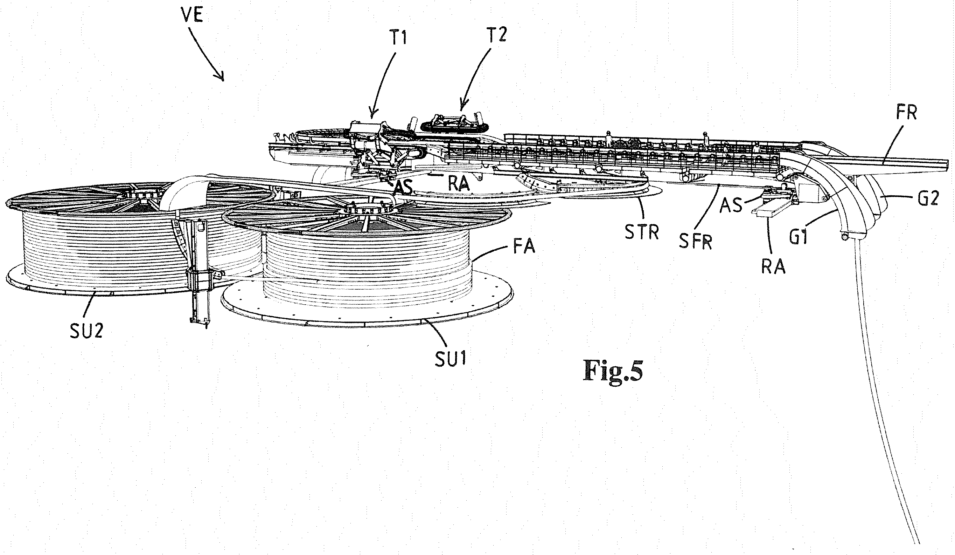

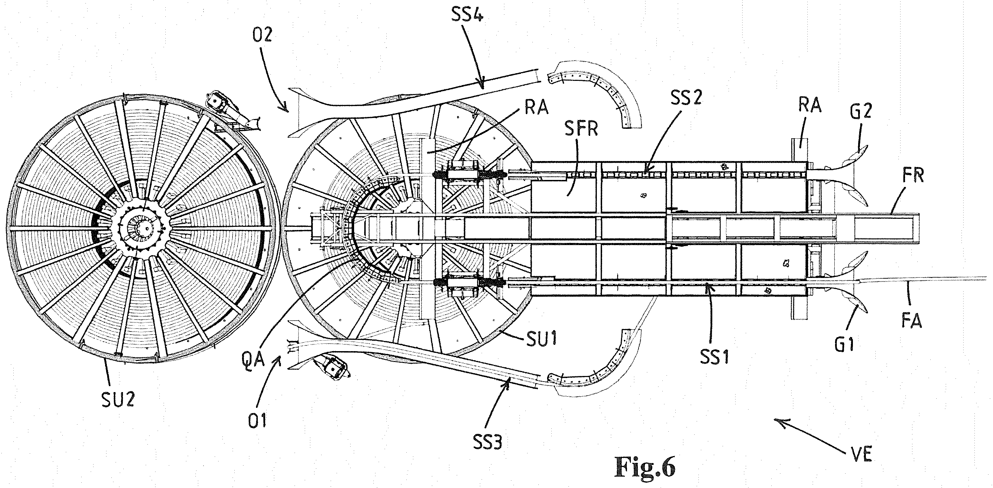

Figs. 4-8 depict a vessel VE according to the invention, where Fig. 4 depicts a perspective top view, Fig. 5 depicts a perspective side view and Figs. 6-8 depict top views of the vessel VE.

The vessel VE may be of the type as shown in Figs. 1-3, but the hull and decks of the vessel are omitted for clarity reasons. Shown in the Figs. 4-8 are a first storage unit SU1, a second storage unit SU2, a first guide G1, a second guide G2, an overboarding quadrant QA, and an article support system for supporting a flexible article FA, in this case a cable FA, between the first and second storage units SU1, SU2 on the one hand and the first and second guides G1, G2 on the other hand allowing the vessel VE to lower the flexible article, i.e. cable FA, into a sea.

The article support system includes a first support section SS1 extending between the first guide G1 and the overboarding quadrant QA, a second support section SS2 extending between the second guide G2 and the overboarding quadrant QA, a third support section SS3 extending between the first storage unit SU1 and the second support section SS2, and a fourth support section SS4 extending between the second storage unit SU2 and the first support section SS1. The overboarding quadrant QA is configured to support and guide the cable FA between the first and second support sections SS1, SS2.

In this embodiment, the first and second storage units SU1, SU2 are arranged below an upper deck similar to the embodiment of Figs. 1-3. A cable guide system CGS is provided per storage unit SU1, SU2 to guide the cable FA through a respective opening O1, O2 in the upper deck (only schematically indicated in Fig. 6) to above the upper deck to be received by the third and fourth support sections SS3, SS4, respectively.

The first guide G1, the second guide G2, the first support section SS1, the second support section SS2, and the overboarding quadrant QA are arranged on a frame SFR that is moveable relative to the upper deck of the vessel in a substantially horizontal plane as will be explained in more detail below by reference to the Figs. 6-8, in which the substantially horizontal plane extends in the plane of the drawings.

To move the frame SFR, rails RA are provided on the upper deck, which rails RA extend in a direction transverse to a longitudinal axis of the frame SFR, i.e. transverse to a longitudinal axis of the vessel VE, and an actuation system AS is provided to move the frame SFR in a direction parallel to the rails RA and to move the frame SFR in a direction perpendicular thereto, i.e. parallel to the longitudinal axis of the frame SFR or vessel VE. In this embodiment, this may result in the combination of frame SFR and actuation system being moveable in the direction parallel to the rails RA relative to the rails RA and the frame SFR being moveable relative to the actuation system in the direction perpendicular thereto. It is therefore also possible that the frame SFR is provided with rails at its underside to engage with the actuation system AS.

Arranged on the frame SFR is a support structure STR configured to support and guide the cable FA as part of the third support section SS3. In the shown Figures 1-8, the cable FA is guided along a support path starting at the first storage unit SU1 and subsequently including the corresponding cable guide system CGS, the third support section SS3 including the support structure STR, the second support structure SS2, the overboarding quadrant QA, the first support section SS1 and the first guide G1. The cable FA enters the sea from the first guide G1.

Although not shown, a cable FA held by the second storage unit SU2 can be guided into the sea along a support path starting at the second storage unit SU2 and subsequently including the corresponding cable guide system CGS, the fourth support section SS4 including the support structure STR, the first support structure SS1, the overboarding quadrant QA, the second support section SS2 and the second guide G2. Hence, the support structure STR can be part of both the third and fourth support sections SS3, SS4.

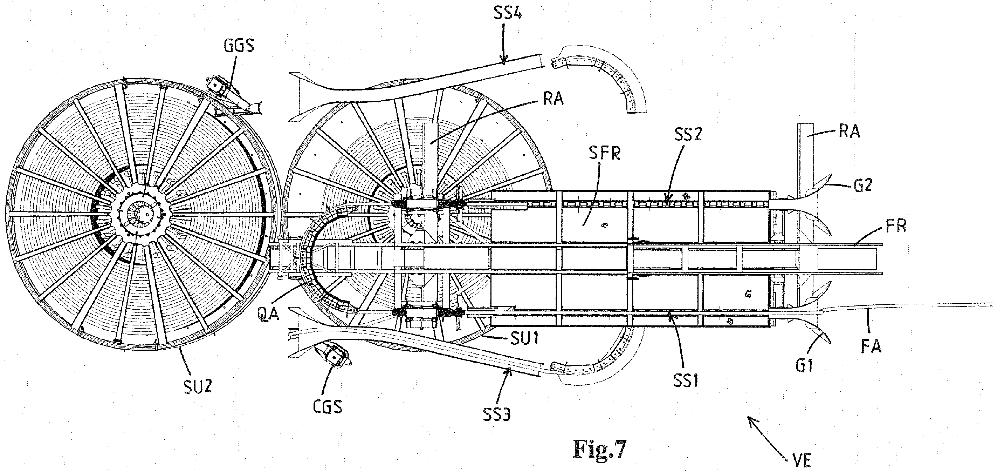

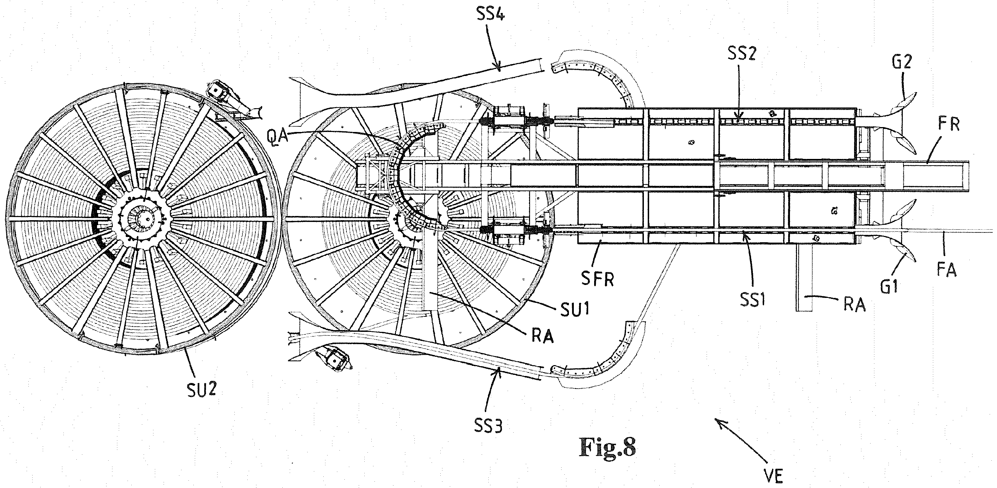

Fig. 6 depicts the frame SFR in a central position within the substantially horizontal plane. To indicate the movability of the frame SFR, reference is made to Figs. 7 and 8. In Fig. 7, the frame SFR has moved to the left, i.e. to the bow of the vessel VE, and to the bottom, i.e. to the port side of the vessel VE, of the drawing, thereby indicating one corner of the substantially horizontal plane. In Fig. 8, the frame SFR has moved to the right, i.e. to the stern of the vessel VE, and to the top, i.e. the starboard side of the vessel VE, of the drawing, thereby indicating an opposite corner fo the substantially horizontal plane. The frame SFR can thus take any position within this rectangular horizontal plane indicated by the two corner positions of Fig. 7 and 8 to compensate for wave-induced motions of the vessel VE.

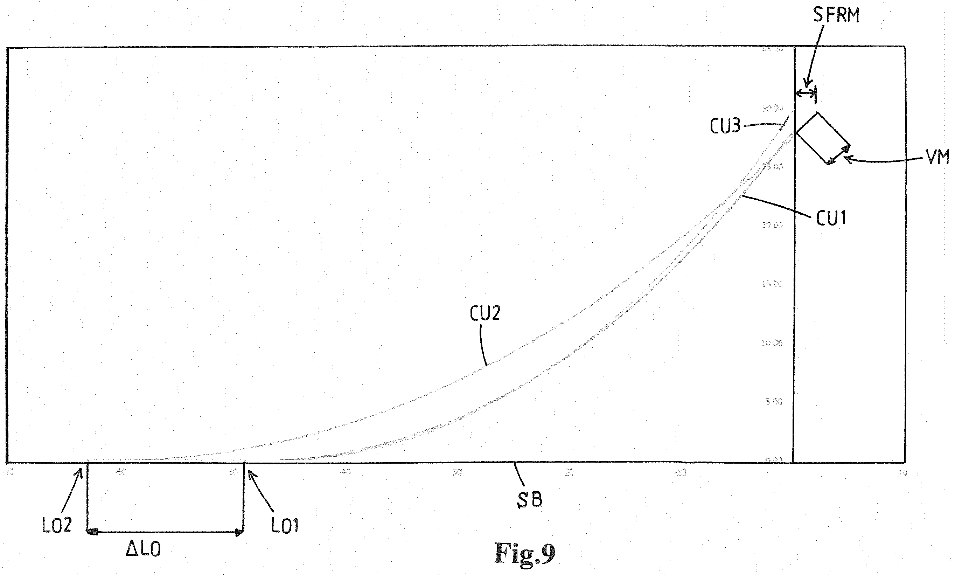

Although the vessel VE of Figs. 4-8 in particular depicts a vessel according to the invention, it can include other aspects as well. For instance, the overboarding quadrant can be used to apply heave compensation. However, the depicted vessel is particularly suitable to be used without or at least minimal heave compensation as will be explained below by reference to Fig. 9.

Fig. 9 depicts a shape of the cable between the vessel at the right side of the graph and the sea bottom SB at the left side of the graph for three situations. Curve CU1 is an initial cable shape, e.g. for the situation in which the frame SFR of the vessel VE is in the central position as depicted in Fig. 7. A characteristic of the curve CU1 is the location LO1 where the cable hits the sea bottom SB

As the result of a wave-induced vessel motion VM, in this case moving the vessel to the right and upwards relative to the initial situation, the cable shape changes to the curve CU2. This uncompensated situation also results in a new location LO2 where the cable makes contact with the sea bottom SB. This cable movement is undesired.

Although it is possible to fully compensate for the vessel motion VM, it is possible to only move the frame SFR without heave compensation in horizontal direction as indicated by arrow SFRM resulting in a cable shape as indicated by curve CU3, which is slightly different from curve CU1, but results in the same location LO1 where the cable engages with the sea bottom SB.

Movement of the frame SFR results in different cable lengths between the storage unit SU1 or SU2 and the frame SFR. To deal with these cable length differences, the support structure STR may be moveably arranged on the frame SFR, e.g. to move in a direction parallel to the longitudinal axis of the frame SFR allowing to compensate for cable length differences caused by movement of the frame SFR.

Alternatively, or additionally, the overboarding quadrant QA may be arranged on a carriage CA that is moveable between the position as shown in the Figs. 4-8 at a distance from the first and second support sections SS1, SS2, and a position closer to the first and second support sections SS1, SS2 allowing to compensate for cable length differences caused by movement of the frame SFR and/or to provide heave compensation at least partially.

Also shown in Figs. 4-8 are a first tensioner T1 as part of the first support section SS1 configured to control movement of the cable FA along the first support section SS1, and a second tensioner T2 as part of the second support section SS2 configured to control movement of the cable FA along the second support section SS2. In the Figs. 4-8, the tensioners T1 and T2 are shown in an open configuration allowing for instance to let the overboarding quadrant QA pass the tensioners.

The vessel VE is further provided with a quadrant handling system including a frame FR at the first and second guide side of the frame SFR. The frame FR can be moved between a substantially horizontal orientation to receive the overboarding quadrant QA and a substantially vertical orientation to lower the quadrant into the sea.

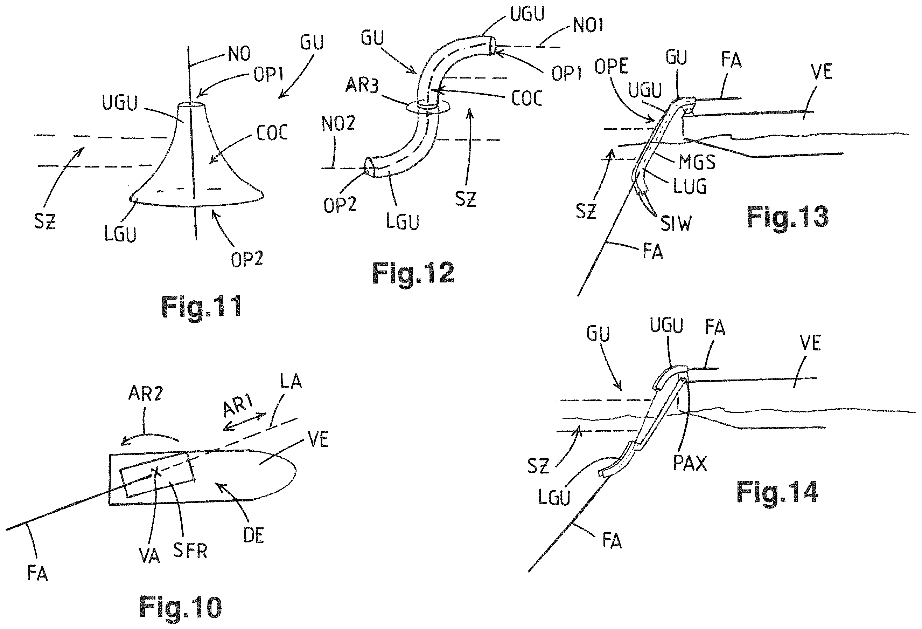

Fig. 10 depicts a top view of a vessel VE, a frame SFR and a flexible article FA that is being lowered from the vessel using the frame SFR. The vessel VE is a vessel according to the invention and thus has similar features as for instance the vessel VE of Fig. 4. However, in the embodiment of Fig. 4, the frame SFR is moveable in a horizontal plane in two orthogonal translation directions as defined by the rails, etc.

In this embodiment, the frame SFR is moveable in said substantially horizontal plane relative to the deck DE of the vessel VE by being rotatable about a substantially vertical axis VA, as indicated by arrow AR2, and by being translatable in a longitudinal direction LA of the frame SFR, as indicated by arrow AR1. It will be apparent that the vertical axis VA can be arranged at different positions in the horizontal plane.

Fig. 11 depicts a guide GU for a vessel according to the invention. The guide GU may be an extension of a first or second guide in the above embodiments or may replace the first or second guide.

The guide GU is to be arranged on a vessel for lowering a flexible article, e.g. a cable, into the sea, said vessel further comprising a storage unit for storing a flexible article, and an article support system for supporting the article between the storage unit and the guide GU. The guide GU is configured such that it has an upper portion UGU guiding the flexible article above a splash zone SZ and a lower portion LGU guiding the flexible article below the splash zone SZ.

The upper and lower portions UGU, LGU are connected to each other and have a closed outer contour COC fully enclosing the flexible article when guiding the flexible article through the splash zone SZ. As a result thereof, the splash zone SZ has a reduced effect on the flexible article guided by the guide GU.

The shape of the closed outer contour resembles that of a bell of a trumpet with the size increasing from upper portion to lower portion. The shape may be a part of a paraboloid or hyperboloid or similar-like shape. In this embodiment, a first opening OP1 at the upper portion UGU allows the flexible article to enter the guide GU and a second opening OP2 at the lower portion LGU allows the flexible article to leave the guide GU. Both the first OP1 and second opening OP2 extend in a substantially horizontal plane, i.e. a normal NO to said planes extends substantially vertically.

Fig. 12 depicts a guide GU for a vessel according to the invention. The guide GU is more suitable to replace the first or second guide in the above embodiments.

The guide GU is to be arranged on a vessel for lowering a flexible article, e.g. a cable, into the sea, said vessel further comprising a storage unit for storing a flexible article, and an article support system for supporting the article between the storage unit and the guide GU. The guide GU is configured such that it has an upper portion UGU guiding the flexible article above a splash zone SZ and a lower portion LGU guiding the flexible article below the splash zone SZ.

The upper and lower portions UGU, LGU are connected to each other and have a closed outer contour COC fully enclosing the flexible article when guiding the flexible article through the splash zone SZ. As a result thereof, the splash zone SZ has a reduced effect on the flexible article guided by the guide GU.

The shape of the closed outer contour resembles that of a double-bend tubular, hence, having a constant circular cross-section. The shape may thus be a bend cylindrical shape. In this embodiment, a first opening OP1 at the upper portion UGU allows the flexible article to enter the guide GU and a second opening OP2 at the lower portion LGU allows the flexible article to leave the guide GU. Both the first OP1 and second opening OP2 extend in a substantially vertical plane, i.e. a respective normal NO1, NO2 to said planes extends substantially horizontally.

The lower portion LGU is rotatably mounted to the upper portion UGU as indicated by arrow AR3, so that the opening OP2 can be directed in a plurality of directions relative to the opening OP1.

Fig. 13 depicts a guide GU for a vessel VE according to the invention. The guide GU in this case replaces the first or second guide in the above embodiments.

The guide GU is in this embodiment arranged on an aft portion of the vessel VE for lowering a flexible article FA, e.g. a cable, into the sea, said vessel VE further comprising a storage unit for storing a flexible article, and an article support system for supporting the article between the storage unit and the guide GU.

The guide GU is configured such that it has an upper portion UGU guiding the flexible article above a splash zone SZ and a lower portion LGU guiding the flexible article below the splash zone SZ.

The upper and lower portions UGU, LGU are connected to each other and have an u-shaped cross section formed by a main guiding surface MGS and two side walls SIW extending from said main guiding surface. The u-shape results in an opening OPE opposite the main guiding surface allowing the flexible article FA to be positioned in and out of a space defined in between the side walls.

Fig. 14 depicts a guide GU for a vessel VE according to the invention. The guide GU in this case replaces the first or second guide in the above embodiments.

The guide GU in this embodiment is arranged on an aft portion of the vessel VE for lowering a flexible article FA, e.g. a cable, into the sea, said vessel VE further comprising a storage unit for storing a flexible article, and an article support system for supporting the article between the storage unit and the guide GU.

The guide GU is configured such that it has an upper portion UGU guiding the flexible article above a splash zone SZ and a lower portion LGU guiding the flexible article below the splash zone SZ.

The upper and lower portions UGU, LGU are arranged at a distance from each other, so that a single trajectory for the flexible article is defined between the upper and lower portion extending through the splash zone SZ. The upper and lower portion UGU, LGU are both connected to the vessel VE. The upper portion UGU may be stationary arranged on the vessel while the lower portion LGU may be pivotably arranged on the vessel to pivot about a substantially horizontal pivot axis PAX.

The upper and lower portion UGU, LGU have a u-shaped cross-section as in the embodiment of Fig. 13, but with the opening in the U-shaped being directed in opposite directions, and having a bend shape so that the flexible article is forced in an S-shape.

## Claims

1. A vessel (VE) for lowering a flexible article (FA), e.g. a cable, into the sea, said vessel comprising:
- a storage unit for storing a flexible article (FA);
- a first guide (G1) for guiding the flexible article (FA) into the sea;
- a second guide (G2) for guiding the flexible article (FA) into the sea;
- an overboarding quadrant (QA); and
- an article support system for supporting the article (FA) between the storage unit and the first and second guides,
wherein the article support system includes a first support section (SS1) extending between the first guide (G1) and the overboarding quadrant (QA), and a second support section (SS2) extending between the second guide (G2) and the overboarding quadrant (QA), said overboarding quadrant (QA) being configured to support and guide the article (FA) between the first support section (SS1) and the second support section (SS2), and a third support section (SS3) extending between the storage unit and the second support section (SS2), wherein the vessel (VE) further includes a frame (SFR) supporting at least the first guide (G1), the second guide (G2), the first support section (SS1), the second support section (SS2) and the overboarding quadrant (QA),
and wherein the frame (SFR) is moveable relative to a deck (DE) of the vessel (VE) in a substantially horizontal plane to compensate for wave-induced motion of the vessel (VE).

2. A vessel according to claim 1, wherein the storage unit is a first storage unit (SU1) and the vessel further comprises a second storage unit (SU2) for storing a flexible article (FA), and wherein the article support system includes a fourth support section (SS4) extending between the second storage unit (SU2) and the first support section (SS1).

3. A vessel according to claim 1 or 2, wherein a part of the third support section (SS3) is supported by the frame (SFR).

4. A vessel according to claim 2, wherein part of the fourth support section (SS4) is supported by the frame (SFR).

5. A vessel according to claim 2, wherein a support structure is arranged on the frame (SFR) that is part of both the third and fourth support sections (SS3, SS4).

6. A vessel according to claim 5, wherein the support structure arranged on the frame (SFR) is moveable relative to the frame (SFR) to adjust for article length differences between the moveable frame (SFR) and fixed storage unit caused by the movement of the frame (SFR) relative to the deck (DE) of the vessel (VE).

7. A vessel according to any of claims 1-6, wherein the deck (DE) of the vessel (VE) is provided with rails (RA) extending in a transverse direction of the vessel (VE), wherein the vessel (VE) includes an actuation system (AS) between the rails (RA) and the frame (SFR), wherein the actuation system (AS) is configured to move the frame (SFR) in a direction parallel to the rails (RA), and wherein the actuation system (AS) is further configured to move the frame (SFR) in a direction parallel to a longitudinal axis (LA) of the vessel (VE).

8. A method for lowering a flexible article (FA) into the sea, wherein use is made of a vessel (VE) according to any of claims 1-7, said method comprising the following steps:
a. lowering a flexible article (FA) into the sea using at least the storage unit, the article support system, and the first and/or second guide (G1, G2),
b. moving the frame (SFR) to compensate for wave-induced motions of the vessel (VE).

9. A method according to claim 8, wherein the frame (SFR) is moved to compensate for the effect of the wave-induced motions of the vessel (VE) on the location where the lowered flexible article (FA) contacts a bottom of the sea.

10. A method according to claim 8 or 9, wherein a support structure is arranged on the frame (SFR), wherein the support structure arranged on the frame (SFR) is moveable relative to the frame (SFR), and wherein at least for a predetermined time during step b) the support structure is moved relative to the frame (SFR) to adjust for article length differences between moveable frame (SFR) and fixed storage unit caused by movement of the frame (SFR) relative to the deck (DE) of the vessel (VE).

11. A method according to any of claims 8-10, wherein the overboarding quadrant (QA) is connectable to a carriage that is moveable in a direction parallel to the longitudinal axis of the frame (SFR) between a location at or near the first and second support sections (SS1, SS2) and a location at a larger distance from the first and second support sections (SS1, SS2), wherein at least for a predetermined time during step b), the carriage is moved relative to the frame (SFR) to adjust for article length differences caused by movement of the frame (SFR) and/or heave compensation.

## Patentansprüche

1. Schiff (VE) zum Absenken eines flexiblen Gegenstands (FA), z. B. eines Kabels, in die See, wobei das Schiff Folgendes umfasst:
- eine Speichereinheit zum Speichern eines flexiblen Gegenstands (FA);
- eine erste Führung (G1) zum Führen des flexiblen Gegenstands (FA) in die See;
- eine zweite Führung (G2) zum Führen des flexiblen Gegenstands (FA) in die See;
- einen Quadranten (QA) zum Entladen über Bord; und
- ein Gegenstandstragsystem zum Tragen des Gegenstands (FA) zwischen der Speichereinheit und der ersten und der zweiten Führung,
wobei das Gegenstandstragsystem einen ersten Tragabschnitt (SS1), der sich zwischen der ersten Führung (G1) und dem Quadranten (QA) zum Entladen über Bord erstreckt, und einen zweiten Tragabschnitt (SS2), der sich zwischen der zweiten Führung (G2) und dem Quadranten (QA) zum Entladen über Bord erstreckt, enthält, wobei der Quadrant (QA) zum Entladen über Bord dazu ausgelegt ist, den Gegenstand (FA) zwischen dem ersten Tragabschnitt (SS1) und dem zweiten Tragabschnitt (SS2) zu tragen und zu führen, sowie einen dritten Tragabschnitt (SS3), der sich zwischen der Speichereinheit und dem zweiten Tragabschnitt (SS2) erstreckt,
wobei das Schiff (VE) ferner einen Rahmen (SFR) enthält, der zumindest die erste Führung (G1), die zweite Führung (G2), den ersten Tragabschnitt (SS1), den zweiten Tragabschnitt (SS2) und den Quadranten (QA) zum Entladen über Bord trägt,
und wobei der Rahmen (SFR) relativ zu einem Deck (DE) des Schiffes (VE) in einer im Wesentlichen horizontalen Ebene beweglich ist, um eine welleninduzierte Bewegung des Schiffes (VE) zu kompensieren.

2. Schiff nach Anspruch 1, wobei die Speichereinheit eine erste Speichereinheit (SU1) ist und das Schiff ferner eine zweite Speichereinheit (SU2) zum Speichern eines flexiblen Gegenstands (FA) umfasst,
und wobei das Gegenstandstragsystem einen vierten Tragabschnitt (SS4) enthält, der sich zwischen der zweiten Speichereinheit (SU2) und dem ersten Tragabschnitt (SS1) erstreckt.

3. Schiff nach Anspruch 1 oder 2, wobei ein Teil des dritten Tragabschnitts (SS3) durch den Rahmen (SFR) getragen wird.

4. Schiff nach Anspruch 2, wobei ein Teil des vierten Tragabschnitts (SS4) durch den Rahmen (SFR) getragen wird.

5. Schiff nach Anspruch 2, wobei eine Tragstruktur an dem Rahmen (SFR) angeordnet ist, die Teil sowohl des dritten als auch des vierten Tragabschnitts (SS3, SS4) ist.

6. Schiff nach Anspruch 5, wobei die an dem Rahmen (SFR) angeordnete Tragstruktur relativ zu dem Rahmen (SFR) beweglich ist, um Längendifferenzen des Gegenstands zwischen dem beweglichen Rahmen (SFR) und der feststehenden Speichereinheit auszugleichen, die durch die Bewegung des Rahmens (SFR) relativ zu dem Deck (DE) des Schiffes (VE) verursacht werden.

7. Schiff nach einem der Ansprüche 1-6, wobei das Deck (DE) des Schiffes (VE) mit Schienen (RA) versehen ist, die sich in einer Querrichtung des Schiffes (VE) erstrecken, wobei das Schiff (VE) ein Betätigungssystem (AS) zwischen den Schienen (RA) und dem Rahmen (SFR) enthält,
wobei das Betätigungssystem (AS) dazu ausgelegt ist, den Rahmen (SFR) in einer Richtung parallel zu den Schienen (RA) zu bewegen, und wobei das Betätigungssystem (AS) ferner dazu ausgelegt ist, den Rahmen (SFR) in einer Richtung parallel zu einer Längsachse (LA) des Schiffes (VE) zu bewegen.

8. Verfahren zum Absenken eines flexiblen Gegenstands (FA) in die See, wobei ein Schiff (VE) nach einem der Ansprüche 1-7 verwendet wird, wobei das Verfahren die folgenden Schritte umfasst:
a. Absenken eines flexiblen Gegenstands (FA) in die See unter Verwendung zumindest der Speichereinheit, des Gegenstandstragsystems und der ersten und/oder zweiten Führung (G1, G2),
b. Bewegen des Rahmens (SFR), um welleninduzierte Bewegungen des Schiffes (VE) zu kompensieren.

9. Verfahren nach Anspruch 8, wobei der Rahmen (SFR) bewegt wird, um die Auswirkung der welleninduzierten Bewegungen des Schiffes (VE) auf die Stelle zu kompensieren, an der der abgesenkte flexible Gegenstand (FA) einen Meeresboden berührt.

10. Verfahren nach Anspruch 8 oder 9, wobei eine Tragstruktur an dem Rahmen (SFR) angeordnet ist, wobei die an dem Rahmen (SFR) angeordnete Tragstruktur relativ zu dem Rahmen (SFR) beweglich ist und wobei zumindest für eine vorbestimmte Zeit während Schritt b) die Tragstruktur relativ zu dem Rahmen (SFR) bewegt wird, um Längendifferenzen des Gegenstands zwischen dem beweglichen Rahmen (SFR) und der feststehenden Speichereinheit auszugleichen, die durch eine Bewegung des Rahmens (SFR) relativ zu dem Deck (DE) des Schiffes (VE) verursacht werden.

11. Verfahren nach einem der Ansprüche 8-10, wobei der Quadrant (QA) zum Entladen über Bord mit einem Schlitten verbindbar ist, der in einer Richtung parallel zur Längsachse des Rahmens (SFR) zwischen einer Position an dem ersten und dem zweiten Tragabschnitt (SS1, SS2) oder in deren Nähe und einer Position in einem größeren Abstand von dem ersten und dem zweiten Tragabschnitt (SS1, SS2) beweglich ist,
wobei zumindest für eine vorbestimmte Zeit während Schritt b) der Schlitten relativ zu dem Rahmen (SFR) bewegt wird, um Längendifferenzen des Gegenstands auszugleichen, die durch Bewegung des Rahmens (SFR) und/oder Seegangsbewegungsausgleich verursacht werden.

## Revendications

1. Navire (VE) pour abaisser un objet souple (FA), par exemple un câble, dans la mer, ledit navire comprenant :
- une unité de stockage pour stocker un article souple (FA) ;
- un premier guide (G1) pour guider l'article souple (FA) dans la mer ;
- un second guide (G2) pour guider l'article souple (FA) dans la mer ;
- un quadrant de mise à l'eau (QA) ; et
- un système de support d'article pour supporter l'article (FA) entre l'unité de stockage et les premier et second guides ;
dans lequel le système de support d'article inclut une première section de support (SS1) s'étendant entre le premier guide (G1) et le quadrant de mise à l'eau (QA), et une seconde section de support (SS2) s'étendant entre le second guide (G2) et le quadrant de mise à l'eau (QA), ledit quadrant de mise à l'eau (QA) étant configuré pour supporter et guider l'article (FA) entre la première section de support (SS1) et la seconde section de support (SS2), et une troisième section de support (SS3) s'étendant entre l'unité de stockage et la seconde section de support (SS2),
dans lequel le navire (VE) inclut en outre un châssis (SFR) supportant au moins le premier guide (G1), le second guide (G2), la première section de support (SS1), la seconde section de support (SS2) et le quadrant de mise à l'eau (QA),
et dans lequel le châssis (SFR) est mobile par rapport à un pont (DE) du navire (VE) dans un plan sensiblement horizontal pour compenser le mouvement induit par les vagues du navire (VE).

2. Récipient selon la revendication 1, dans lequel l'unité de stockage est une première unité de stockage (SU1) et le navire comprend en outre une seconde unité de stockage (SU2) pour stocker un article souple (FA),
et dans lequel le système de support d'article inclut une quatrième section de support (SS4) s'étendant entre la seconde unité de stockage (SU2) et la première section de support (SS1).

3. Navire selon la revendication 1 ou 2, dans lequel une partie de la troisième section de support (SS3) est supportée par le châssis (SFR).

4. Navire selon la revendication 2, dans lequel une partie de la quatrième section de support (SS4) est supportée par le châssis (SFR).

5. Navire selon la revendication 2, dans lequel une structure de support est agencée sur le châssis (SFR) qui fait partie à la fois des troisième et quatrième sections de support (SS3, SS4).

6. Navire selon la revendication 5, dans lequel la structure de support agencée sur le châssis (SFR) est mobile par rapport au châssis (SFR) pour ajuster des différences de longueur d'article entre le châssis mobile (SFR) et l'unité de stockage fixe provoquées par le mouvement du châssis (SFR) par rapport au pont (DE) du navire (VE).

7. Navire selon l'une quelconque des revendications 1 à 6, dans lequel le pont (DE) du navire (VE) est pourvu de rails (RA) s'étendant dans une direction transversale du navire (VE), dans lequel le navire (VE) inclut un système d'actionnement (AS) entre les rails (RA) et le châssis (SFR),
dans lequel le système d'actionnement (AS) est configuré pour déplacer le châssis (SFR) dans une direction parallèle aux rails (RA), et dans lequel le système d'actionnement (AS) est en outre configuré pour déplacer le châssis (SFR) dans une direction parallèle à un axe longitudinal (LA) du navire (VE).

8. Procédé pour abaisser un article souple (FA) dans la mer, dans lequel un navire (VE) selon l'une quelconque des revendications 1 à 7 est utilisé, ledit procédé comprenant les étapes suivantes :
a. l'abaissement d'un article souple (FA) dans la mer à l'aide au moins de l'unité de stockage, du système de support d'article et du premier et/ou second guide (G1, G2),
b. le déplacement du châssis (SFR) pour compenser des mouvements induits par les vagues du navire (VE).

9. Procédé selon la revendication 8, dans lequel le châssis (SFR) est déplacé pour compenser l'effet des mouvements induits par les vagues du navire (VE) sur l'emplacement où l'article souple (FA) abaissé entre en contact avec un fond de la mer.

10. Procédé selon la revendication 8 ou 9, dans lequel une structure de support est agencée sur le châssis (SFR), dans lequel la structure de support agencée sur le châssis (SFR) est mobile par rapport au châssis (SFR), et dans lequel au moins pendant une durée prédéterminée au cours de l'étape b), la structure de support est déplacée par rapport au châssis (SFR) pour ajuster des différences de longueur d'article entre le châssis mobile (SFR) et l'unité de stockage fixe provoquées par le mouvement du châssis (SFR) par rapport au pont (DE) du navire (VE).

11. Procédé selon l'une quelconque des revendications 8 à 10, dans lequel le quadrant de mise à l'eau (QA) peut être relié à un chariot qui est mobile dans une direction parallèle à l'axe longitudinal du châssis (SFR) entre un emplacement au niveau ou à proximité des première et seconde sections de support (SS1, SS2) et un emplacement à une distance plus grande des première et seconde sections de support (SS1, SS2),
dans lequel au moins pendant une durée prédéterminée au cours de l'étape b), le chariot est déplacé par rapport au châssis (SFR) pour ajuster des différences de longueur d'article provoquées par le mouvement du châssis (SFR) et/ou une compensation de pilonnement.
